(19) Europäisches Patentamt
European Patent Office
Office européen des brevets

(11) EP 3 023 445 A1

(12) **EUROPEAN PATENT APPLICATION**
published in accordance with Art. 153(4) EPC

(43) Date of publication:
**25.05.2016 Bulletin 2016/21**

(21) Application number: **14826304.9**

(22) Date of filing: **23.05.2014**

(51) Int Cl.:
**C08G 2/04** (2006.01)      **C08G 2/06** (2006.01)
**C08G 2/10** (2006.01)

(86) International application number:
**PCT/JP2014/063735**

(87) International publication number:
**WO 2015/008537 (22.01.2015 Gazette 2015/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.07.2013   JP 2013149458**

(71) Applicant: **Mitsubishi Gas Chemical Company,
Inc.
Tokyo 100-8324 (JP)**

(72) Inventors:
• **HIRANO, Tomoyuki**
  **Hiratsuka-shi**
  **Kanagawa 254-0016 (JP)**
• **ITO, Akira**
  **Yokkaichi-shi**
  **Mie 510-0886 (JP)**

(74) Representative: **Müller-Boré & Partner
Patentanwälte PartG mbB
Friedenheimer Brücke 21
80639 München (DE)**

(54) **METHOD FOR PRODUCING OXYMETHYLENE COPOLYMER**

(57)      Provided is a method for producing an oxymethylene copolymer continuously and with high polymerization yield, whereby it becomes possible to improve heat stability and the formaldehyde generation amount while keeping MD resistance and folding endurance. Provided is a method for producing an oxymethylene copolymer, which comprises the steps of: carrying out a copolymerization reaction of a monomer raw material comprising trioxane and 1,3-dioxolane in an amount of 7.0 to 22 mass% relative to the amount of trioxane in the presence of boron trifluoride in an amount of 0.03 to 0.10 mmol relative to 1 mol of trioxane and sterically hindered phenol in an amount of 0.006 to 2.0 mass% relative to the amount of trioxane; and adding a polymerization terminator to a reaction system at the point of time at which the polymerization yield of the copolymer becomes 92% or more to terminate the polymerization.

EP 3 023 445 A1

**Description**

TECHNICAL FIELD

The present invention relates to a process for producing a stable oxymethylene copolymer.

BACKGROUND ART

Oxymethylene copolymers have excellent properties in mechanical properties, thermal properties, electric properties, sliding properties and molding properties, etc., and hence have been widely used as structure materials and mechanism parts, etc., in the field of electric appliances, automobile parts, and precision machine parts, etc.

In recent years, the scope of applications of such resins has been broadened remarkably, and the resins are requested to show higher performances as well as to be produced at a lower cost.

A serious problem in the requested qualities includes thermal decomposition of the oxymethylene copolymer in the molding machine during the molding and generation of formaldehyde, which causes defects in appearance and molding failure such as dimensional abnormality, etc. In addition, there has been pointed out adverse effects to human body, such as sick house syndrome, etc., due to the generation of formaldehyde from the final product. The Ministry of Health, Labour and Welfare of Japan has issued a guideline for the indoor formaldehyde concentration to be 0.08 ppm as a countermeasure against the sick house syndrome. Thus, there is a need for an oxymethylene copolymer which generates a minimum amount of formaldehyde, while maintaining excellent rigidity and toughness required to the final products. In order to reduce the amount of formaldehyde generated, various processes for producing oxymethylene copolymers have been proposed to date. These processes include, for example, a process comprising polymerizing monomers containing reduced amount of impurities and rapidly cooling the produced polymer immediately after the polymerization to inactivate the catalyst and suppress any side reaction; a process comprising adding water or the like to the extruder directly for carrying out terminal-stabilization; and a process comprising polymerizing monomers to which a sterically hindered phenol has been added, subsequently adjusting the oxymethylene copolymer after the polymerization to an optimum particle size and deactivating the catalyst, adding water and then devolatilizing the molten product under reduced pressure for terminal-stabilization, etc.

On the other hand, a production process for producing the oxymethylene copolymer with a high polymerization yield, in particular, a polymerization yield of 95% or more, is advantageous in the viewpoints of productivity and economy. However, it provides a number of thermally unstable structures during the polymerization. As the result, it produces products poor in thermal stability and generates a large amount of formaldehyde in the molding machine.

There has been disclosed a manufacturing technique of the oxymethylene copolymer by using trioxane, 1,3-dioxolane and boron trifluoride as starting materials which are industrially produced inexpensively and easy in handling, whereby formation of the unstable portions is suppressed (for example, see Patent Document 1). Also, it is excellent in reducing a recovery cost of the monomer, because it provides a high polymerization yield and requires no washing at the time of termination of the polymerization.

However, according to this production process, with the increase of the polymerization yield, formation of the portions including a formic acid ester structure, which are unstable to heat or hydrolysis, proceeds. Therefore, in a higher polymerization yield, the formation amount of unstable portions increases, which causes adverse effects on the quality of the polymer, e.g., formation of formaldehyde, in the final product. Therefore, the process cannot be said to be satisfactory.

Also, there has been known a technique for carrying out copolymerization with a comonomer copolymerizable with trioxane in the presence of a cation active catalyst, in which a sterically hindered phenol having a molecular weight of 350 or more has been added to the system in an amount of 0.001 to 2.0% by mass based on the total mass of the monomers prior to the copolymerization (for example, see Patent Document 2). More specifically, in Patent Document 2, there is disclosed a technique in which copolymerization of trioxane and 1,3-dioxolane is carried out using an ether coordinate compound of boron trifluoride as a catalyst and in the presence of a sterically hindered phenol, thereby improving the alkali decomposition rate and thermal weight loss ratio.

Further, there have been known techniques for copolymerizing trioxane and 1,3-dioxolane using an ether coordinate compound of boron trifluoride as a catalyst, in which the copolymerization is carried out by using 1,3-dioxolane to which a sterically hindered phenol having a molecular weight of 350 or more has been added (for example, see Patent Documents 3 and 4). However, according to these techniques, the polymerization yields are each 85% or less, and washing is carried out simultaneously with the termination of copolymerization, whereby a large amount of energy is required for recovery of unreacted monomers, and thus, they are economically disadvantageous. In addition, these documents have never been investigated on whether or not rigidity and toughness required for the oxymethylene copolymer are maintained after improvement in thermal stability and an odor.

On the other hand, as an oxymethylene copolymer that leaves behind an extremely small amount attached to the mold during molding, shows an excellent folding fatigue resistance, and undergoes a little weight loss by heating, there has been known an oxymethylene copolymer obtained by copolymerizing 100 mol of trioxane with 8.5 to 18 mol of 1,3-dioxolane for 3 to 60 minutes and stabilized by a specific stabilization method (for example, see Patent Document 5). However, the document does not mention the amount of formaldehyde generated, and the technique is still unsatisfactory in the viewpoint of the balance between the mechanical properties and the thermal stability.

PRIOR ART DOCUMENTS

Patent Documents

Patent Document 1: JP H8-325341 A
Patent Document 2: JP H3-63965 B
Patent Document 3: JP H7-242652 A
Patent Document 4: JP H11-269165 A
Patent Document 5: WO 2002/77049 A

SUMMARY OF THE INVENTION

Problems to be Solved by the Invention

In view of the above situation, an object of the present invention is to provide a process for producing in a high yield an oxymethylene copolymer having an improved thermal stability and a suppressed formaldehyde generation, while maintaining the excellent MD resistance (mold deposit resistance) and folding endurance.

Means for Solving the Problems

The present inventors have intensively studied to solve the above-mentioned problems, and as a result, they have found that the above-mentioned object can be accomplished by a process for producing an oxymethylene copolymer by subjecting a monomer starting material containing trioxane and 1,3-dioxolane to copolymerization using boron trifluoride as a catalyst, in which trioxane and a specific amount of 1,3-dioxolane are copolymerized in the presence of a specific amount of a sterically hindered phenol to obtain an oxymethylene copolymer, and, at a point in time when the copolymerization reaction gives a polymerization yield of 92% or more, the formed copolymer and a polymerization terminator are contacted to terminate the copolymerization, whereby they have accomplished the present invention.
That is, the present invention is to provide the following production process:

A process for producing an oxymethylene copolymer which comprises the steps of:

subjecting a monomer starting material comprising trioxane and 1,3-dioxolane in an amount of 7.0 to 22% by mass based on the mass of the trioxane, to a copolymerization reaction, in the presence of boron trifluoride in a proportion of 0.03 to 0.10 mmol per 1 mol of the trioxane and a sterically hindered phenol in an amount of 0.006 to 2.0% by mass based on the trioxane; and
terminating the copolymerization reaction by adding a polymerization terminator into the reaction system at a point in time when the copolymerization reaction gives a polymerization yield of 92% or more.

Advantageous Effects of the Invention

According to the process for producing an oxymethylene copolymer of the present invention, an oxymethylene copolymer showing a high thermal stability and a small amount of generation of formaldehyde can be obtained in a high yield, while maintaining the excellent MD resistance and folding endurance, so that its industrial value is extremely high.

DESCRIPTION OF EMBODIMENTS

The process for producing an oxymethylene copolymer of the present invention comprises subjecting a monomer starting material containing trioxane and a specific amount of 1,3-dioxolane to copolymerization in the presence of a specific amount of boron trifluoride and a specific amount of a sterically hindered phenol, and contacting a polymerization terminator with the copolymer formed at a point in time when the copolymerization reaction gives a polymerization yield of 92% or more. In the following, the present application is explained in detail.

In the present invention, the trioxane (1,3,5-trioxane) to be used as a monomer is a cyclic trimer of formaldehyde, which is commercially available or can be prepared by a production process known to a person skilled in the art, and the production process is not particularly limited. As a stabilizer, an amine is usually contained in an amount of 0.00001 to 0.003 mmol, preferably 0.00001 to 0.0005 mmol, more preferably 0.00001 to 0.0003 mmol per mole of the trioxane. If the content of the amine is larger than the above, there is a potential risk of causing an adverse effect such as deactivation of the catalyst, etc. If it is lower than the above, there is a potential risk of causing formation of paraformaldehyde during preservation of the trioxane, etc.

As the amine to be contained in the trioxane of the present invention, a primary amine, a secondary amine, a tertiary amine, an amine based compound having an alcoholic hydroxyl group in the molecule, an alkylated melamine and a hindered amine compound may be used alone or in combination. The primary amine suitably used includes n-propylamine, isopropylamine, n-butylamine, etc.; the secondary amine includes diethylamine, di-n-propylamine, diisopropylamine, di-n-butylamine, piperidine, piperazine, 2-methylpiperazine, morpholine, N-methylmorpholine, N-ethyl morpholine, etc.; the tertiary amine includes triethylamine, tri-n-propylamine, triisopropylamine, tri-n-butylamine, etc.; the amine based compound having an alcoholic hydroxyl group in the molecule suitably used includes monoethanolamine, diethanolamine, triethanolamine, N-methylethanolamine, N,N-dimethylethanolamine, N-ethylethanolamine, N,N-diethylethanolamine, N-(β-aminoethyl)isopropanolamine, hydroxyethylpiperazine, etc.; and the alkylated melamine suitably used includes a methoxymethyl substitution product of melamine, i.e., a mono-, di-, tri-, tetra-, penta- or hexamethoxymethylmelamine, or a mixture thereof, etc. The hindered amine compound suitably used includes bis(2,2,6,6-tetramethyl-4-piperidinyl)sebacate, bis(1,2,2,6,6-pentamethyl-4-piperidinyl)sebacate, tetrakis(2,2,6,6-tetramethyl-4-piperidinyl) 1,2,3,4-butanetetracarboxylate, poly[[[6-(1,1,3,3-tetramethylenebutyl)-amino-1,3,5-triazin-2,4-diyl][(2,2,6,6-tetramethyl-4-piperidinyl)imino]hexamethylene-[(2,2,6,6-tetramethyl-4-piperidinyl)imino]], 1,2,2,6,6,-pentamethylpiperidine, a polycondensate of dimethyl succinate/1-(2-hydroxyethyl)-4-hydroxy-2,2,6,6-tetramethylpiperidine, and a condensate of N,N'-bis(3-aminopropyl)ethylenediamine/2,4-bis[N-butyl-N-(1,2,2,6,6-pentamethy1-4-piperidyl)amino]-1,3,5-triazine, etc. Among these, triethanolamine is most suitably used.

In the present invention, the 1,3-dioxolane to be used as a comonomer is commercially available or can be prepared by a production process known to a person skilled in the art. The production process is not particularly limited. In the present invention, the amount of the 1,3-dioxolane to be added ranges 7.0 to 22% by mass, preferably 7.4 to 18.1 % by mass, more preferably 8.2 to 13.2% by mass based on the amount of the trioxane. If the amount of the 1,3-dioxolane to be used is larger than the above, the polymerization rate would be markedly slow and the thermal stability would be lowered. If it is less than the above, folding endurance would be lowered.

With regard to the boron trifluoride to be used in the present invention, its coordinate compound is preferably used. They are commercially available or can be prepared by a production process known to a person skilled in the art. The coordinate compound of boron trifluoride includes a coordinate compound with an organic compound having an oxygen atom or a sulfur atom. The above-mentioned organic compound includes an alcohol, phenol, an acid, an ether, an acid anhydride, an ester, a ketone, an aldehyde, a dialkyl, a sulfide, etc. Among these, the coordinate compound of boron trifluoride is preferably etherate, and specific preferred examples include diethyl etherate and dibutyl etherate of boron trifluoride. The amount to be added thereof ranges 0.03 to 0.10 mmol, preferably 0.03 to 0.08 mmol, and more preferably 0.04 to 0.07 mmol, per 1 mol of trioxane.

If the amount of the boron trifluoride to be added is larger than the above, the thermal stability is lowered and the copolymerization rate is markedly lowered, so that it is not suitable for industrial production.

The boron trifluoride is used as such, or in the form of a solution. When it is used as a solution, the solvent includes an aliphatic hydrocarbon such as hexane, heptane, cyclohexane, etc.; an aromatic hydrocarbon such as benzene, toluene, xylene, etc.; and a halogenated hydrocarbon such as methylene dichloride, ethylene dichloride, etc.

Desirably, the sterically hindered phenol used at the time of copolymerization in the present invention is the following sterically hindered phenol. For example, it includes one or more members of sterically hindered phenols such as dibutylhydroxytoluene, triethyleneglycol-bis-3-(3-t-butyl-4-hydroxy-5-methylphenyl)-propionate, pentaerythrityl-tetrakis-3-(3,5-di-t-butyl-4-hydroxyphenyl)propionate, hexamethylenebis[3-(3,5-di-t-butyl-4-hydroxyphenyl)propionate], 2,2'-methylenebis(6-t-butyl-4-methylphenol), 3,9-bis{2-[3-(3-t-butyl-4-hydroxy-5 -methylphenyl)propionyloxy]-1,1-dimethylethyl}-2,4,8,10-tetraoxaspiro[5.5]undecane, N,N'-hexan-1,6-diyl bis[3-(3,5-di-t-butyl-4-hydroxyphenyl)propionamide], 1,6-hexandiyl 3,5-bis(1,1-dimethylethyl)-4-hydroxybenzenepropionate, etc. Among these, triethyleneglycol-bis-3-(3-t-butyl-4-hydroxy-5-methylphenyl)propionate, pentaerythrityl-tetrakis-3-(3,5-di-t-butyl-4-hydroxyphenyl)propionate, 3,9-bis{2-[3-(3-t-butyl-4-hydroxy-5-methylphenyl)-propionyloxy]-1,1-dimethylethyl}-2,4,8,10-tetraoxaspiro[5.5]undecane is suitably used, and triethyleneglycol-bis-3-(3-t-butyl-4-hydroxy-5-methylphenyl)propionate is the most suitably used.

In the production process of the present invention, the amount of the sterically hindered phenol to be added ranges usually 0.006 to 2.0% by mass, preferably 0.01 to 0.5% by mass, and more preferably 0.02 to 0.1% by mass, based on the amount of the trioxane. If the amount of the sterically hindered phenol used is larger than the above, adverse effects such as lowering in the molecular weight of the formed oxymethylene copolymer or lowering in polymerization yield, etc., would be caused. If it is lower than the above, unstable portions such as formic acid ester structure, etc., in the formed oxymethylene copolymer would be increased, and an adverse effect such as lowering in heat or hydrolysis stability, etc., would be caused.

A chain transfer agent may be used to control the molecular weight of the oxymethylene copolymer to control the intrinsic viscosity. The intrinsic viscosity is adjusted to 0.5 to 5 dl/g, preferably 0.7 to 3 dl/g, more preferably 0.8 to 2 dl/g. The chain transfer agent includes a carboxylic acid, a carboxylic acid anhydride, an ester, an amide, an imide, a phenol, an acetal compound, etc. In particular, phenol, 2,6-dimethylphenol, methylal, polyoxymethylenedimethoxide are suitably used. Most preferred is methylal. The chain transfer agent may be used as such, or in the form of a solution. When it is used as a solution, the solvent includes an aliphatic hydrocarbon such as hexane, heptane, cyclohexane, etc.; an aromatic hydrocarbon such as benzene, toluene, xylene; etc.; a halogenated hydrocarbon such as methylene dichloride, ethylene dichloride, etc.

In the present invention, as the polymerization terminator, a primary amine, a secondary amine, a tertiary amine, an alkylated melamine, a hindered amine compound, a trivalent organophosphorus compound, a hydroxide of an alkali metal or an alkaline earth metal may be used alone or in combination. The primary amine suitably used includes n-propylamine, isopropylamine, n-butylamine, etc.; the secondary amine includes diethylamine, di-n-propylamine, diisopropylamine, di-n-butylamine, piperidine, morpholine, etc.; the tertiary amine includes triethylamine, tri-n-propylamine, triisopropylamine, tri-n-butylamine, etc.; the alkylated melamine includes a methoxymethyl substitution product of melamine, i.e., a mono-, di-, tri-, tetra-, penta- or hexamethoxymethylmelamine, or a mixture thereof, etc. The hindered amine compound suitably used includes, bis(2,2,6,6-tetramethyl-4-piperidinyl)sebacate, bis(1,2,2,6,6-pentamethyl-4-piperidinyl)sebacate, tetrakis(2,2,6,6-tetramethyl-4-piperidinyl) 1,2,3,4-butanetetracarboxylate, poly[[6-(1,1,3,3-tetramethylenebutyl)-amino-1,3,5-triazin-2,4-diyl][(2,2,6,6-tetramethyl-4-piperidinyl)imino]hexamethylene-[(2,2,6,6-tetramethyl-4-piperidinyl)imino]], 1,2,2,6,6,-pentamethylpiperidine, polycondensate of dimethyl succinate-1-(2-hydroxyethyl)-4-hydroxy-2,2,6,6-tetramethylpiperidine and N,N'-bis(3-aminopropyl)ethylenediamine-2,4-bis[N-butyl-N-(1,2,2,6,6-pentamethyl-4-piperidyl)amino]-1,3,5-triazine condensate, etc.

Among these, a hindered amine compound, a trivalent organophosphorus compound, and an alkylated melamine are preferred in the viewpoint of color hue. The hindered amine compounds most preferably used include bis(2,2,6,6-tetramethyl-4-piperidinyl)sebacate, bis(1,2,2,6,6-pentamethyl-4-piperidinyl)sebacate, polycondensate of dimethyl succinate/1-(2-hydroxyethyl)-4-hydroxy-2,2,6,6-tetramethylpiperidine, condensate of N,N'-bis(3-aminopropyl)ethylenediamine/2,4-bis[N-butyl-N-(1,2,2,6,6-pentamethyl-4-piperidyl)amino]-1,3,5-triazine; the trivalent organophosphorus compound includes triphenylphosphine; and the alkylated melamine includes hexamethoxymethylmelamine. When the polymerization terminator is used in the form of a solution or a suspension, the solvent to be used is not particularly limited, and in addition to water and alcohols, various kinds of aliphatic and aromatic organic solvents including acetone, methyl ethyl ketone, hexane, cyclohexane, heptane, benzene, toluene, xylene, methylene dichloride, ethylene dichloride, etc., can be used. Among these, preferred are water, alcohols and aliphatic and aromatic organic solvents such as acetone, methyl ethyl ketone, hexane, cyclohexane, heptane, benzene, toluene, xylene, etc.

In the present invention, the period of time for copolymerization ranges usually 0.25 to 120 minutes, preferably 1 to 60 minutes, more preferably 1 to 30 minutes, most preferably 2 to 15 minutes. If the period of time for copolymerization is longer than the above, unstable portions would be increased. If it is shorter than the above, the polymerization yield would be lowered in some cases.

Impurities such as water, formic acid, methanol, formaldehyde, etc., contained in the trioxane are inevitably generated during the industrial production of the trioxane. The total amount thereof is preferably 100 ppm or less, more preferably 70 ppm or less, most preferably 50 ppm or less in the trioxane. In particular, the amount of water is preferably 50 ppm or less, more preferably 20 ppm or less, and most preferably 10 ppm or less. Also, with regard to 1,3-dioxolane, similarly to the trioxane, the total content of impurities, such as water, formic acid, formaldehyde, etc., in the 1,3-dioxolane is preferably 1,000 ppm or less, more preferably 200 ppm or less, particularly preferably 100 ppm or less, and most preferably 50 ppm or less. Moreover, because the activity of the catalyst is lowered by the presence of water, a method for preventing entry of water from the outside into the polymerization apparatus is preferably employed. Such a method includes a method in which the polymerization apparatus is always purged with an inert gas, such as nitrogen gas, during the polymerization reaction.

In the present invention, the polymerization reaction may be carried out by a solution polymerization performed in the presence of an inert solvent. However, it is preferably carried out by bulk polymerization performed using substantially no solvent, because the cost of solvent recovery is not required and the sterically hindered phenol exhibits a significant effect. When a solvent is used, the solvent includes aliphatic hydrocarbons, such as hexane, heptane, and cyclohexane; aromatic hydrocarbons, such as benzene, toluene, and xylene; and halogenated hydrocarbons, such as methylene dichloride and ethylene dichloride.

In the present invention, the copolymerization reaction is preferably carried out by using a continuous system polymerization apparatus. In this case, preferred is a method in which the copolymerization reaction is conducted using one polymerizer or two or more continuous polymerizers connected in series. A preferred example of the continuous polymerizer includes a kneader having at least two horizontal rotating shafts and having a screw blade or paddle blade in each of the rotating shafts. Specifically, a preferred continuous polymerization apparatus is such that the polymerization apparatus includes a pair of shafts in a long casing which has an inner cross section formed of partly overlapped two circles, a jacket is provided around the casing, the shafts each have a large number of convex lens paddle blades fitted therein, the convex lens paddle blades are engaged with the mating paddle blades, and the blades are designed so that the inner surface of the casing and the surface of the mating convex lens paddle blades are cleaned by the movement of their tips.

In the production process of the present invention, the copolymerization is performed in the presence of the sterically hindered phenol. The sterically hindered phenol may be added as such or in the form of a solution. When it is used in the form of a solution, the solvent may be any of, for example, aliphatic hydrocarbons such as hexane, heptane and cyclohexane; aromatic hydrocarbons such as benzene, toluene and xylene; and halogenated hydrocarbons such as methylene dichloride and ethylene dichloride. Alternatively, the trioxane monomer or the 1,3-dioxolane comonomer may be used as a solvent. In order to maintain the activity of the sterically hindered phenol during the copolymerization reaction, a part or whole of the sterically hindered phenol is desirably added as such or in the form of a solution thereof at an inlet of a continuous polymerizing apparatus. Alternatively, a prescribed amount of the sterically hindered phenol may be dissolved in the trioxane before the introduction to the polymerization apparatus.

In the production process of the present invention, the polymerization terminator is added usually after the copolymerization reaction gives a polymerization yield of 92% or more, preferably 95% or more, and more preferably 97% or more, and thereby the catalyst (boron trifluoride) is deactivated to terminate the copolymerization. By allowing the copolymerization to proceed to a polymerization yield of 92% or more, it becomes possible to save the energy consumption required to recover the unreacted monomers. Moreover, because the process improves the molecular chains themselves of the oxymethylene copolymer, it is hence effective for reducing the amount of formaldehyde formation and for improving the thermal stability and storage stability for any resin compositions of which the composition of additives are optimized for various applications. Accordingly, the value of the present invention in industry is extremely great.

In the production of an oxymethylene copolymer by copolymerizing trioxane and 1,3-dioxolane in the presence of boron trifluoride and a sterically hindered phenol and terminating the copolymerization by bringing the resultant oxymethylene copolymer into contact with a polymerization terminator, the amount of heat-labile and hydrolysis-labile moieties including formate ester structures of the oxymethylene copolymer may be small when the copolymerization is terminated at a polymerization yield of less than 92%; however, high costs are incurred to recover the unreacted monomers. If the copolymerization is terminated at a polymerization yield of 92% or more, the costs incurred for the recovery of the unreacted monomers may be reduced; however, the conventional technique cannot prevent a significant increase in the amount of heat-labile and hydrolysis-labile moieties including formate ester structures in the oxymethylene copolymer. In contrast, surprisingly, the present inventors have found that the amount of labile moieties including formate ester structures in the oxymethylene copolymer may be significantly decreased and the thermal stability can be improved by performing the copolymerization in the presence of the specific amounts of boron trifluoride and a sterically hindered phenol until the copolymerization is terminated at a polymerization yield of 92% or more.

The copolymerization reaction is terminated by bringing the polymerization terminator into contact with the oxymethylene copolymer in the reaction system. The polymerization terminator may be used as such, or in the form of a solution or a suspension. The contact is desirably conducted in such a manner that a small amount of the polymerization terminator, or a solution or suspension of the polymerization terminator is added continuously to the oxymethylene copolymer, while crushing the copolymer for efficient contact. If the termination of the copolymerization reaction involves a washing step in which the oxymethylene copolymer is introduced into a large amount of a solution or suspension of the polymerization terminator, the process becomes complicated by the necessity of adding a downstream solvent recovery or solvent removal step. This results in an increase in utilities and hence leads to industrial disadvantages. It is more preferable from an industrial viewpoint that the copolymerization be terminated by the addition of a small amount of the polymerization terminator to the reaction system including the oxymethylene copolymer. When the polymerization terminator is added to the reaction system, the addition is preferably followed by mixing with a mixer. As the polymerization terminator mixer for mixing the added polymerization terminator with the oxymethylene copolymer, a continuous mixer such as a single- or twin-screw or paddle mixer similar to the aforementioned continuous polymerization apparatus may be used.

The copolymerization reaction and the copolymerization termination reaction are preferably performed consecutively. That is, as the apparatus, a continuous polymerization apparatus in which a continuous polymerizer and successively a polymerization terminator-mixer are connected in series is suitable for the production of the oxymethylene copolymer.

Because the oxymethylene copolymer may be obtained in a high yield after the termination of the copolymerization, the copolymer as it is produced may be transferred to a stabilization step. In the stabilization step, the following stabilization treatment methods (1) and (2) may be taken.

(1) Stabilization treatment method in which the oxymethylene copolymer obtained is melted by heating to remove labile moieties.
(2) Stabilization treatment method in which the oxymethylene copolymer obtained is hydrolyzed in an aqueous medium to remove labile moieties.

After being stabilized by any of these methods, the oxymethylene copolymer may be pelletized to give a stabilized formable material.

Of the above methods, the stabilization treatment method (1) is simpler and therefore more industrially preferable than the method (2). Specifically, when the stabilization treatment method (1) is taken, the oxymethylene copolymer is preferably melt-kneaded at a temperature in the range of from the melting temperature of the copolymer to 100°C higher than the melting temperature under a pressure of 760 to 0.1 mmHg. When the stabilization treatment temperature is below the melting temperature of the oxymethylene copolymer, the labile moieties would not be sufficiently decomposed and the stabilization would not be effective. When the stabilization treatment temperature is more than 100°C higher than the melting temperature, undesirable decrease in thermal stability would be caused as the result of yellowing, thermal decomposition of the polymer backbone chains, and the simultaneous formation of labile moieties. The treatment temperature is more preferably in the range of 170 to 250°C, and most preferably 180 to 235°C. When the pressure during the stabilization treatment is higher than 760 mmHg, the decomposition gas resulting from the decomposition of labile moieties would not effectively be removed out of the system, which would not produce sufficient stabilization effect. The pressure during the stabilization treatment below 0.1 mmHg would not be preferable, because evacuating the system to such a high vacuum degree industrially disadvantageously requires an expensive apparatus and also because the molten resin tends to flow out of the suction vent to cause operation troubles. The pressure is more preferably in the range of 740 to 10 mmHg, and most preferably 400 to 50 mmHg. The treatment time may be appropriately selected in the range of 1 minute to 1 hour.

In the present invention, the apparatus used in the stabilization treatment may be a single-screw, or twin- or higher-screw vented extruder. To ensure a residence time that is required, it is advantageous to arrange two or more extruders in series. It is more advantageous to combine extruders having a high degassing effect such as ZSK extruders and ZDS extruders from Werner & Pfleiderer. Most effectively, such extruders are combined with a surface renewal mixer as will be demonstrated in Examples later.

In the stabilization treatment method (1), stabilization treatment may be performed by adding stabilizers such as antioxidants and heat stabilizers during the melt-kneading of the oxymethylene copolymer. By optimizing the chemical composition of additives so as to comply with the intended application, the oxymethylene copolymers that have enhanced thermal stability and formaldehyde emissions, while maintaining excellent toughness and rigidity may be tailored to be suitable to the intended application.

For the above-mentioned stabilization treatment, the antioxidant which can be used includes one, or two or more sterically hindered phenols such as triethyleneglycol-bis-3-(3-t-butyl-4-hydroxy-5-methylphenyl)propionate, pentaerythrityl-tetrakis-3-(3,5-di-t-butyl-4-hydroxyphenyl)propionate, 2,2'-methylenebis(6-t-butyl-4-methylphenol), 3,9-bis{2-[3-(3-t-butyl-4-hydroxy-5-methylphenyl)propionyloxy]-1,1-dimethylethyl}-2, 4,8,10-tetraoxaspiro[5.5]undecane,N,N'-hexan-1,6-diyl bis[3-(3,5-di-t-butyl-4-hydroxyphenyl)propionamide], 1,6-hexandiyl 3,5-bis(1,1-dimethylethyl)-4-hydroxybenzenepropionate, etc. The heat stabilizer includes amine-substituted triazines such as melamine, methylol melamine, benzoguanamine, cyanoguanidine, N,N-diarylmelamine, etc., polyamides, urea derivatives, urethanes, etc., and an inorganic acid salt, a hydroxide or an organic acid salt of sodium, potassium, calcium, magnesium, barium, etc.

The oxymethylene copolymers obtained by the process of the present invention described in detail hereinabove have excellent properties similarly to oxymethylene copolymers obtained by the conventional processes and may be used in similar applications.

To the oxymethylene copolymers produced by the process of the present invention, additives including colorants, nucleating agents, plasticizers, release agents, fluorescent whitening agents, antistatic agents such as polyethylene glycol and glycerol, and light stabilizers such as benzophenone compounds and hindered amine compounds may optionally be added.

EXAMPLES

Examples and Comparative Examples of the present invention will be described hereinbelow, which should not be construed as limiting the scope of the present invention. Also, the terms and measurement methods described in Examples and Comparative Examples will be explained below.

Crude oxymethylene copolymers: Crude oxymethylene copolymers refer to those which have been produced after the termination of the copolymerization but have not yet been subjected to the stabilization step.

Amount of formaldehyde emission: Pellets obtained by the stabilization step were formed into a disc having a diameter of 50 mm and a thickness of 3 mm using a forming apparatus SAV-30-30 manufactured by SANJO SEIKI CO., LTD. at a cylinder temperature of 215°C. On the next day of the forming, the disc was tested by the method described in Verband der Deutschen Automobilindustrie VDA275 (Automobile interior parts - Quantitative determination of formaldehyde emission by modified flask method) to determine the amount of formaldehyde emission.

(i) 50 ml of distilled water are charged into a polyethylene container. The test piece is placed therein in a suspended state. Then, the container is tightly closed and held at 60°C for 3 hours.

(ii) The container is allowed to stand at room temperature for 60 minutes. Thereafter, the test piece is taken out.

(iii) The concentration of formaldehyde absorbed in the distilled water in the polyethylene container is determined by acetylacetone colorimetry with a UV spectrometer.

Thermal stability

Residential thermal stability: As a measure of thermal stability, residential thermal stability was measured. Using pellets that have undergone the melting stabilization treatment and dried at 80°C for 4 hours, the resin in an amount corresponding to six shots was retained in an injection molding apparatus (IS75E manufactured by TOSHIBA MACHINE CO., LTD.) held at a cylinder temperature of 240°C. A strip of test piece was molded every 12 minutes, and the time (minutes) taken by the occurrence of silver marks (silver streaks) over the entire surface of the molded piece attributable to the expansion of the resin was measured.

Thermal weight loss: Pellets that have undergone the melting stabilization treatment were placed in a test tube. The inside of the tube was purged with nitrogen. Subsequently, the tube was heated at 240°C for 2 hours under a reduced pressure of 10 Torr. The weight loss (% by mass) after the heating relative to the weight before the heating was measured. The thermal weight loss was calculated using $(X - Y)/X \times 100$ wherein X was the weight before the heating and Y was the weight after the heating.

MD resistance: The oxymethylene copolymer was subjected to continuous injection molding using an injection molding machine having a molding die clamping pressure of 7 tons at a cylinder temperature of 220°C, a mold temperature of 70°C and a molding cycle of about 6 seconds, and the number of shots until a mold deposit was generated at the mold was counted.

Folding endurance test (folding endurance fatigue test): measured in accordance with JIS P8115. The details thereof are as follows.

(i) Predrying conditions of copolymer pellets

3 kg of pellets were charged in a vat made of stainless, and predried at 90°C for 2 hours or longer. As a dryer, a hot air circulation type dryer was used.

(ii) Molding of test piece

The predried pellets were charged in a molding machine (manufactured by NISSEI PLASTIC INDUSTRIAL CO., LTD., Type: FS160S, mold clamping force: 160 tf) attached to a hopper dryer, and test pieces were molded under the following molding conditions. The dimension of the test piece was a thickness of 0.8 mm, a width of 12.7 mm and a length of 127 mm.

[Table 1]

| Test piece molding conditions | | | |
|---|---|---|---|
| Cylinder temperature nozzle side | Zone 1 | (°C) | 190 |
| | Zone 2 | | 200 |
| | Zone 3 | | 200 |
| | Zone 4 | | 180 |
| Screw rotation number | | (rpm) | 60 |
| Injection pressure | | (kgf/cm$^2$) | 950 |

(continued)

| Test piece molding conditions | | |
|---|---|---|
| Injection time | (sec) | 15 |
| Cooling time | (sec) | 15 |
| Mold temperature | (°C) | 90 |
| Hopper dryer temperature | (°C) | 80 |

(iii) Measurement of folding endurance

1) Conditioning of test pieces

The test pieces after molding were conditioned in a room at a temperature of $23\pm2°C$, and a relative humidity of $50\pm5\%$ for 48 hours or longer, and then, were subjected to a folding endurance fatigue test.

2) Folding endurance fatigue test

Reverse bend fatigue test was carried out under the following conditions, and the number of times until the rupture was measured.
Test conditions: Flexural angle; $\pm135°$, Tension load; 1 kgf, Test speed; 220 times/min, Chuck portion R; 0.38 mm

3) Apparatus used

MIT type folding endurance fatigue tester (manufactured by Toyo Seiki Seisaku-sho, Ltd.)
Polymerization yield: 20 g of a crude oxymethylene copolymer was dipped in 20 ml of acetone, then, filtered and washed twice with acetone, and vacuum dried at 60°C until it became a constant weight. After that, it was accurately weighted, and the polymerization yield was determined by the following formula.

$$\text{Polymerization yield} = M1/M0 \times 100$$

M0: Mass before acetone treatment
M1: Mass after acetone treatment and drying

Examples 1 to 12 and Comparative Examples 1 to 7

Oxymethylene copolymers were produced with use of a continuous polymerization apparatus including a continuous polymerizer and a polymerization terminator mixer connected to the polymerizer in series. The continuous polymerizer was such that the polymerizer included a pair of shafts in a long casing which had an inner cross section formed of partly overlapped two circles, the inner cross section having a longer diameter of 100 mm, a jacket was provided around the casing, the shafts each had a large number of convex lens paddle blades fitted therein, the convex lens paddle blades were engaged with the mating paddle blades, and the blades were designed so that the inner surface of the casing and the surface of the mating convex lens paddle blades were cleaned by the movement of their tips. The polymerization terminator mixer had a structure similar to the polymerizer and was designed so that a solution containing the polymerization terminator could be introduced into the mixer through a supply port in order to continuously mix the terminator with the polymer. To an inlet of the continuous polymerizer, a predetermined amount of trioxane (0.00025 mmol of triethanolamine was contained as a stabilizer per 1 mol of trioxane) was supplied. Except for Comparative Example 7, an 11 weight % 1,3-dioxolane solution of a sterically hindered phenol (triethylene glycol-bis-3-(3-t-butyl-4-hydroxy-5-methylphenyl) propionate) was fed through a line different from the trioxane feed line so that the sterically hindered phenol would be supplied in the amount shown in Table 2. Further, 1,3-dioxolane as a comonomer was continuously fed through a third line. The total amount of 1,3-dioxolane supplied from the two lines was controlled to the amount shown in Table 2. In Comparative Example 7, no sterically hindered phenols were supplied. Simultaneously, boron trifluoride diethyl etherate as a catalyst was continuously supplied in the amount shown in Table 2. Further, methylal as a molecular weight modifier was continuously supplied in an amount required to control the intrinsic viscosity of the product to 1.0 to 1.5 dl/g. The boron trifluoride diethyl etherate and the methylal were each added in the form of a benzene solution. The total amount of benzene used was not more than 1% by mass relative to the trioxane. A benzene solution containing triphenylphosphine in a molar amount two times that of the catalyst was continuously fed through the inlet of the polymerization terminator mixer to terminate the copolymerization reaction, and the crude oxymethylene copolymer was obtained from the outlet. The continuous polymerization apparatus was operated under the polymerization conditions in which the revolution number of the shaft in the continuous polymerizer was approximately 35 rpm, the revolution number of the shaft in the polymerization terminator mixer was approximately 60 rpm, the jacket temperature of the continuous polymerizer was set at 85°C, and the jacket temperature of the polymerization terminator mixer was set at 85°C. The polymerization time was about 10 minutes.

100 Parts by mass of the crude oxymethylene copolymer was mixed together with 0.05 part by mass of melamine, 0.15 part by mass of polyethylene glycol (molecular weight: about 20,000) and 0.3 part by mass of triethylene glycol-bis-3-(3-t-butyl-4-hydroxy-5-methylphenyl) propionate. The mixture was fed to a vented twin-screw extruder (50 mm in diameter, L/D = 49) and was melt-kneaded under a reduced pressure of 160 mmHg at 200°C. Subsequently, the kneadate was fed to a surface renewal mixer, which included two rotational shafts each having a plurality of scraper blades displaced relative to one another so that the blades would not hit other blades during the rotation of the shafts in different directions, the blades being arranged to rotate while keeping slight gaps between their tips and the inner surface of the casing and between their tips and the other shafts. The polymer was kneaded by the rotation of the shafts while the surface of the molten polymer was constantly renewed to help the evaporation of volatile components. In this manner, the melting stabilization treatment of the copolymer was performed again under a reduced pressure of 160 mmHg at 210 to 240°C. The average residence time from the inlet of the twin-screw extruder to the outlet of the surface renewal mixer was 25 minutes. The stabilized oxymethylene copolymer was extruded through a die and was pelletized with a pelletizer.

[Table 2]

| | TOX amount | DOL amount | | Catalyst amount | Sterically hindered phenol (A) amount |
|---|---|---|---|---|---|
| | (mol/hr) | (mol/hr) | DOL (% by mass) based on TOX | (mmol/mol-TOX) | A (% by mass) based on TOX |
| Example 1 | 1055 | 96 | 7.5 | 0.04 | 0.030 |
| Example 2 | 1055 | 109 | 8.5 | 0.04 | 0.030 |
| Example 3 | 1055 | 128 | 10.0 | 0.04 | 0.030 |
| Example 4 | 1055 | 167 | 13.0 | 0.04 | 0.030 |
| Example 5 | 1055 | 231 | 18.0 | 0.04 | 0.030 |
| Example 6 | 1055 | 282 | 22.0 | 0.04 | 0.030 |
| Example 7 | 1055 | 109 | 8.5 | 0.03 | 0.030 |
| Example 8 | 1055 | 109 | 8.5 | 0.10 | 0.030 |
| Example 9 | 1055 | 109 | 8.5 | 0.04 | 0.006 |
| Example 10 | 1055 | 109 | 8.5 | 0.04 | 0.010 |
| Example 11 | 1055 | 109 | 8.5 | 0.04 | 0.500 |
| Example 12 | 1055 | 109 | 8.5 | 0.04 | 2.000 |
| Comparative Example 1 | 1055 | 77 | 6.0 | 0.04 | 0.030 |
| Comparative Example 2 | 1055 | 321 | 25.0 | 0.04 | 0.030 |
| Comparative Example 3 | 1055 | 109 | 8.5 | 0.02 | 0.030 |
| Comparative Example 4 | 1055 | 109 | 8.5 | 0.12 | 0.030 |

(continued)

| | TOX amount | DOL amount | | Catalyst amount | Sterically hindered phenol (A) amount |
|---|---|---|---|---|---|
| | (mol/hr) | (mol/hr) | DOL (% by mass) based on TOX | (mmol/mol-TOX) | A (% by mass) based on TOX |
| Comparative Example 5 | 1055 | 109 | 8.5 | 0.04 | 0.003 |
| Comparative Example 6 | 1055 | 109 | 8.5 | 0.04 | 3.000 |
| Comparative Example 7 | 1055 | 109 | 8.5 | 0.04 | - |
| Abbreviation: TOX=1,3,5-Trioxane<br>DOX=1,3-Dioxolane<br>Catalyst=Boron trifluoride/diethyl etherate<br>A=Triethylene glycol-bis-3-(3-t-butyl-4-hydroxy-5-methylphenyl)propionate | | | | | |

[Table 3]

| | | Characteristics of crude oxymethylene copolymer | | Residence thermal stability | MD resistance | Folding endurance | Generated amount of formaldehyde |
|---|---|---|---|---|---|---|---|
| | | Polymerization yield (% by mass) | Thermal weight loss ratio (% by mass) | (min) | (shots) | (times) | ($\mu$g/g-POM) |
| | Example 1 | 98 | 2.1 | 72 | 4000 | 101 | 17 |
| | Example 2 | 98 | 1.5 | 72 | 5000 | 107 | 18 |
| | Example 3 | 97 | 1.0 | 72 | 5000 | 110 | 16 |
| | Example 4 | 95 | 0.8 | 72 | 5000 | 127 | 17 |
| | Example 5 | 93 | 0.7 | 72 | 5000 | 131 | 15 |
| | Example 6 | 92 | 0.7 | 72 | 5000 | 134 | 15 |
| | Example 7 | 92 | 1.6 | 72 | 5000 | 98 | 14 |
| | Example 8 | 99 | 2.2 | 60 | 4000 | 97 | 21 |
| | Example 9 | 96 | 1.8 | 72 | 5000 | 100 | 20 |
| | Example 10 | 96 | 1.7 | 72 | 5000 | 106 | 19 |
| | Example 11 | 94 | 1.6 | 72 | 5000 | 105 | 18 |
| | Example 12 | 93 | 1.9 | 72 | 5000 | 101 | 21 |
| | Comparative Example 1 | 98 | 2.5 | 60 | 1000 | 15 | 27 |
| | Comparative Example 2 | 85 | 0.6 | 48 | 3000 | 134 | 17 |
| | Comparative Example 3 | 70 | 5.1 | 12 | 1000 | 20 | 49 |
| | Comparative Example 4 | 99 | 3.5 | 36 | 4000 | 103 | 35 |
| | Comparative Example 5 | 97 | 2.5 | 60 | 5000 | 102 | 23 |

(continued)

|  | Characteristics of crude oxymethylene copolymer | | Residence thermal stability | MD resistance | Folding endurance | Generated amount of formaldehyde |
|---|---|---|---|---|---|---|
|  | Polymerization yield (% by mass) | Thermal weight loss ratio (% by mass) | (min) | (shots) | (times) | ($\mu$g/g-POM) |
| Comparative Example 6 | 90 | 2.7 | 60 | 5000 | 99 | 27 |
| Comparative Example 7 | 98 | 2.5 | 60 | 5000 | 105 | 24 |

The comparison between the properties of Examples 1 to 12 and Comparative Examples 1 to 7 shown in Table 3 reveals that the production process of the present invention can produce resin compositions having enhanced formaldehyde emissions and thermal stability in a high yield, while maintaining the MD resistance and folding endurance.

**Claims**

1. A process for producing an oxymethylene copolymer which comprises the steps of:

   subjecting a monomer starting material comprising trioxane and 1,3-dioxolane in an amount of 7.0 to 22% by mass based on the mass of the trioxane, to a copolymerization reaction, in the presence of boron trifluoride in a proportion of 0.03 to 0.10 mmol per 1 mol of the trioxane and a sterically hindered phenol in an amount of 0.006 to 2.0% by mass based on the trioxane; and
   terminating the copolymerization reaction by adding a polymerization terminator into the reaction system at a point in time when the copolymerization reaction gives a polymerization yield of 92% or more.

2. The process for producing an oxymethylene copolymer according to Claim 1, wherein an amine is contained in the trioxane in a proportion of 0.00001 to 0.003 mmol per 1 mol of the trioxane.

3. The process for producing an oxymethylene copolymer according to Claim 1 or 2, wherein the polymerization terminator is at least one member selected from the group consisting of triphenylphosphine, a hindered amine compound and an alkylated melamine.

4. The process for producing an oxymethylene copolymer according to any one of Claims 1 to 3, wherein the copolymerization reaction is terminated by adding the polymerization terminator into the reaction system at a point in time when the copolymerization reaction gives a polymerization yield in 97% or more.

5. The process for producing an oxymethylene copolymer according to any one of Claims 1 to 4, wherein the reaction is carried out by using a continuous polymerization apparatus in which a continuous polymerizer and a polymerization terminator mixer are connected in series.

6. The process for producing an oxymethylene copolymer according to Claim 5, wherein a part or all of the sterically hindered phenol is added through an inlet of the continuous polymerizer.

7. The process for producing an oxymethylene copolymer according to any one of Claims 1 to 6, which further comprises the step of stabilization treatment performed by melt-kneading the oxymethylene copolymer obtained by the step of terminating the copolymerization at a temperature in the range of from the melting temperature of the oxymethylene copolymer to a temperature 100°C higher than the melting temperature under a pressure of 760 to 0.1 mmHg.

## INTERNATIONAL SEARCH REPORT

| International application No. |
|---|
| PCT/JP2014/063735 |

**A. CLASSIFICATION OF SUBJECT MATTER**
*C08G2/04*(2006.01)i, *C08G2/06*(2006.01)i, *C08G2/10*(2006.01)i

According to International Patent Classification (IPC) or to both national classification and IPC

**B. FIELDS SEARCHED**

Minimum documentation searched (classification system followed by classification symbols)
C08G2/00-2/38

Documentation searched other than minimum documentation to the extent that such documents are included in the fields searched

Jitsuyo Shinan Koho        1922-1996    Jitsuyo Shinan Toroku Koho    1996-2014
Kokai Jitsuyo Shinan Koho   1971-2014    Toroku Jitsuyo Shinan Koho    1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 02/077049 A1 (Mitsubishi Gas Chemical Co., Inc.), 03 October 2002 (03.10.2002), column 6, lines 1 to 2, 3 to 11; column 7, lines 15 to 16; column 8, lines 1 to 13; column 13, line 12 to column 14, line 7 & US 2003/0125512 A1     & EP 1275671 A1 & WO 2002/077049 A1     & DE 60220479 D & DE 60220479 T          & KR 10-0740812 B1 | 1-7 |
| Y | JP 03-063965 B2 (Polyplastics Co., Ltd.), 03 October 1991 (03.10.1991), claims; column 3, lines 15 to 19, 33 to 38; column 4, lines 3 to 7; column 5, lines 18 to 21, 34 to 38 & US 4579935 A1      & EP 128739 A1 & DE 3479125 D        & AU 2913584 A | 1-7 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 August, 2014 (19.08.14) | 02 September, 2014 (02.09.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 3 023 445 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8325341 A
- JP H363965 B
- JP H7242652 A
- JP H11269165 A
- WO 200277049 A